# EUROPÄISCHE PATENTSCHRIFT

(11) **EP 3 400 645 B1**
(45) Veröffentlichungstag und Bekanntmachung des Hinweises auf die Patenterteilung: **09.03.2022**
(21) Anmeldenummer: 17700160.9
(22) Anmeldetag: 06.01.2017
(51) Int. Cl.: H02P 1/32, H02P 23/00, F04C 25/02

(54) **VAKUUMPUMPENANTRIEB MIT STERN-DREIECK-UMSCHALTUNG**
VACUUM PUMP DRIVE WITH STAR-DELTA SWITCHOVER
ENTRAÎNEMENT DE POMPE À VIDE AVEC COMMUTATION ÉTOILE-TRIANGLE

(30) Priorität: 07.01.2016 DE 102016200112
(43) Veröffentlichungstag der Anmeldung: 14.11.2018
(73) Patentinhaber: Leybold GmbH, 50968 Köln (DE)
(72) Erfinder: WALZEL, Sebastian, 59427 Unna (DE)
(74) Vertreter: dompatent von Kreisler Selting Werner - Partnerschaft von Patent- und Rechtsanwälten mbB
(86) Internationale Anmeldenummer: PCT/EP2017/050255
(87) Internationale Veröffentlichungsnummer: WO 2017/118723

(56) Entgegenhaltungen:
- EP-A2- 1 515 423
- WO-A1-2008/135532
- WO-A1-2014/183142
- DE-A1-102013 221 342
- Anonymous: "Frequenzumrichter Frequency Converters Drehzahlvariable Verdichter und Vakuumpumpen Compressors and Vacuum Pumps with Variable Speed Drive G-Serie G-Series Seitenkanal Side Channel", , 1. Januar 2007 (2007-01-01), XP055355727, Gefunden im Internet: URL:https://www.ziegener-frick.de/fileadmi n/downloads/pdf/lufttechnik/Seitenkanalver dichter_Elmo/Produktvarianten/FU/G_FU_alle _Katalog.pdf [gefunden am 2017-03-16]

## Beschreibung

Die Erfindung betrifft ein Verfahren zum Antreiben einer Vakuumpumpe.

Vakuumpumpen sind typischerweise als Rotationsvakuumpumpen mit einem Pumpenstator und einem Pumpenrotor ausgebildet. Eine Rotation des Pumpenrotors gegenüber dem Pumpenstator bewirkt eine Veränderung des Drucks. Der Pumpenrotor wird über eine Antriebswelle von einem Elektromotor angetrieben.

Beispielsweise ist aus US 2004/0195994 A1 bekannt, die Motorwindungen des Elektromotors als Stern oder als Dreieck zu verschalten, um die Motorkennlinie und dadurch das zur Verfügung stehende Drehmoment des Motors zu verändern. Dadurch ist es möglich, bei geringerer Drehzahl ein größeres Drehmoment zur Verfügung zu stellen. Eine Besonderheit besteht bei dieser Variante darin, dass jede der beiden Kennlinien nur in einem Arbeitspunkt betrieben wird, so dass der Motor nur in zwei verschiedenen Arbeitspunkten betrieben werden kann.

Anstatt den Elektromotor eines Vakuumpumpenantriebs lediglich in zwei verschiedenen Arbeitspunkten betreiben zu können, hat es sich durchgesetzt, die Elektromotoren mit einem Frequenzumrichter anzusteuern. Der Frequenzumrichter erzeugt in einem Gleichspannungszwischenkreis aus einer Wechselspannung eines Energieversorgungsnetzes zunächst eine gleich gerichtete Spannung, aus der dann eine synthetische Wechselspannung variabler Frequenz als Motoreingangsspannung erzeugt wird. Die Motordrehzahl hängt dabei von der Frequenz der Motoreingangsspannung ab. Das Drehmoment des Motors bleibt über einen weiten Drehzahlbereich konstant.

Bei Vakuumpumpen besteht in Abhängigkeit vom aktuellen Betriebszustand der Pumpe die Notwendigkeit, die Antriebseigenschaften über einen weiten Betriebsbereich anzupassen. Die Möglichkeiten der Anpassung der Leistungsdaten des Antriebs an den Betriebszustand der Pumpe sind jedoch technisch begrenzt z.B. aufgrund des maximal vom Antriebsumrichter lieferbaren Stromes. Ebenfalls die verfügbare Netzspannung stellt ein begrenzendes Element dar. Durch die Umschaltung des Motors kann in einigen Betriebszuständen der Pumpe beispielsweise eine vorhandene Spannungsreserve genutzt werden, wenn der Umrichter keinen zusätzlichen Strom mehr liefern kann. Dieser zusätzliche Leistungsbedarf entsteht vorwiegend bei starken Druck- oder Temperaturänderungen sowie in Abhängigkeit von den geförderten Medien. Weiterhin kann die Notwendigkeit zur Reduzierung des Motorstromes entstehen, wenn Medien mit hoher Temperatur in die Pumpe gelangen und somit der Pumpenrotor thermisch entlastet werden muss. Auch bei der Einleitung von explosiven Medien muss der Arbeitspunkt verändert und damit die Rotortemperatur verringert werden.

In DE 10 2013 009 036 A1 wird eine Antriebseinheit für eine Zerkleinerungsvorrichtung mit einem Stern-/Dreieck-umschaltbaren Motor und einem Antriebsstromrichter zur Regelung oder Steuerung einer physikalischen Größe des Motors beschrieben. Die Stern-Dreieck-Umschaltung erfolgt durch eine Steuereinheit unter Berücksichtigung mindestens einer in der Antriebseinheit erfassten Größe.

Anonymous: "Frequensumrichter Frequencys Converters Drehzahlvariable Verdichter und Vakuumpumpen Compressors and Vaccum Pumps with Variable Speed Drive G-Serie G-Series Seitenkanal Side Channel", 1. Januar 2007 (2007-01-01), XP055355727 beschreibt ein Verfahren zum Antreiben einer Vakuumpumpe mit einem Vakuumpumpenantrieb.

DE10 2013 221 342 A1 beschreibt einen Elektromotor für eine Vakuumpumpe mit mehreren Spulen zur Erzeugung eines magnetischen Antriebsfeldes.

Der Erfindung liegt die Aufgabe zugrunde, ein Verfahren zum Antreiben einer Vakuumpumpe zu schaffen, um bei wechselnden Betriebsdaten innerhalb der Vakuumpumpe die Kennlinie des antreibenden Elektromotors anzupassen.

Das erfindungsgemäße Verfahren ist definiert durch Anspruch 1.

Erfindungsgemäß ist eine zum Beispiel elektronisch ausgebildete Steuereinrichtung elektrisch und/oder optisch mit einer Umschalteinrichtung und mit einer Messvorrichtung verbunden. Die Umschalteinrichtung weist mindestens einen elektrischen Schalter auf und ist dazu ausgebildet, die Motorwindungen in Abhängigkeit von der Schalterstellung als Stern oder als Dreieck zu verschalten. Die Messvorrichtung ist mit Sensoren zur Erfassung von physikalischen Betriebsgrößen der Vakuumpumpe, wie zum Beispiel der Pumpentemperatur, dem Vakuumpumpendruck und/oder der Drehzahl der Vakuumpumpe versehen. Die Steuereinrichtung ist dazu ausgebildet, in Abhängigkeit von der gemessenen Betriebsgröße der Vakuumpumpe eine Betätigung des Schalters der Umschalteinrichtung zu bewirken, um dadurch die Stern-Dreieck-Umschaltung der Motorwindungen in Abhängigkeit von dem gemessenen Wert der Betriebsgröße zu erzielen.

Die Umschaltung erfolgt automatisch, das heißt beispielsweise sobald ein vorgegebener Grenzwert für die betreffende Betriebsgröße überschritten oder unterschritten wird. Dies wird von der Steuereinrichtung automatisch erkannt, in dem die betreffende Betriebsgröße kontinuierlich gemessen und überwacht, das heißt mit mindestens einem Grenzwert verglichen wird. Sobald der Grenzwert überschritten oder unterschritten wird, erfolgt die Umschaltung automatisch.

Die Umschaltung von der Sternverschaltung zur Dreiecksverschaltung beziehungsweise von der Dreiecksverschaltung zur Sternverschaltung der Motorwindungen bewirkt eine Veränderung der Motorkennlinie aus Motorspannung und Motorstrom. Beispielsweise kann für den Betriebszustand des Anlaufens oder bei Druckänderungen in Abhängigkeit von der Drehzahl die Sternschaltung gewählt werden. Dabei wird der Motor mit einer höheren Spannung und einem kleineren Strom betrieben, was wiederum zu einer Reduzierung der Verlustleistung im Motor, im speziellen im Pumpenrotor führt. Bei Überschreitung einer bestimmten Drehzahl oder Unterschreitung eines bestimmten Druckes würde dann die Umschaltung auf die Dreieckschaltung erfolgen um genügend Spannungsreserve für die weitere Beschleunigung der Vakuumpumpe bei geringerem Druck zu haben.

Unter einer Sternschaltung wird insbesondere auch eine Doppel-Sternschaltung verstanden. In entsprechender Weise wird unter einer Dreieckschaltung insbesondere auch eine Doppel-Dreieckschaltung verstanden.

Der in DE 10 2013 009 036 A1 beschriebene Antrieb für eine Zerkleinerungsvorrichtung berücksichtigt lediglich eine in der Antriebseinheit erfasste physikalische Größe des Motors. Die Erfindung sieht hingegen vor mindestens einen Betriebsparameter der Vakuumpumpe, wie zum Beispiel den Vakuumpumpendruck, die Temperatur und/oder die Drehzahl zu erfassen und die Stern-Dreieck-Umschaitung automatisch in Abhängigkeit von diesem Betriebsparameter vorzunehmen. Es werden also gerade nicht lediglich physikalische Größen des Motors, wie zum Beispiel die Motorspannung, der Zwischenkreisstrom oder die Temperatur von Bauelementen des Antriebsstromrichters erfasst. Durch das Erfassen und Überwachen mindestens eines Betriebsparameters der Vakuumpumpe wird der entscheidende Vorteil geschaffen, einen veränderten Betriebszustand der Vakuumpumpe direkt und unmittelbar zu erfassen und die Motorkennlinie automatisch anzupassen. Die Drehmomentanpassung ist dadurch sicherer, zuverlässiger und schneller.

Bei einem Vakuumpumpenantrieb sind die bestimmenden Betriebsgrößen nicht ausschließlich innerhalb der Antriebseinheit vorhanden sondern befinden sich überwiegend innerhalb der von der Antriebseinheit angetriebenen Vakuumpumpe.

Es ist daher notwendig die Stern-Dreieck Umschaltung nicht ausschließlich aufgrund von Daten, die innerhalb der Antriebseinheit ermittelt wurden umzuschalten, sondern als Grundlage für die Umschaltung die Betriebsdaten der Vakuumpumpe zu nutzen beispielsweise den Gasdruck, die Gaszusammensetzung oder die Gastemperatur.

Diese Betriebsdaten hängen beispielweise von der Art und dem Zustand der zu fördernden Gase ab, womit eine automatische Anpassung der Motorkennlinie auf verschiedene Arten von Gasen (z.B. Wasserstoff, Helium, Argon usw.) und / oder in Abhängigkeit von deren Temperatur möglich ist. Diese können nicht innerhalb der Antriebseinheit erfasst werden. Stattdessen müssen die Betriebsdaten direkt in der Pumpe als bestimmende Größen herangezogen werden.

Bei der in DE 10 2013 009 036 A1 beschriebenen Umschaltung sind also ausschließlich die Betriebsdaten der Antriebseinheit für die Umschaltung bestimmend, wohingegen bei dem hier vorgestellten Verfahren die Betriebsdaten innerhalb der angetriebenen Vakuumpumpe überwiegend bestimmend für die Umschaltung sind.

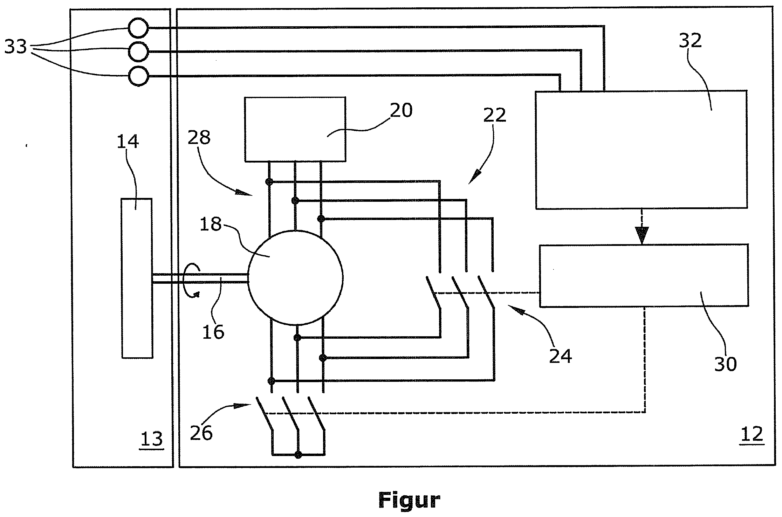

Im Folgenden wird anhand der Figur ein Ausführungsbeispiel der Erfindung näher erläutert. Die Figur zeigt eine schematische Darstellung des Ausführungsbeispiels.

Die Vakuumpumpe 13 des Ausführungsbeispiels weist einen Pumpenrotor 14 auf, der über eine Antriebswelle 16 mechanisch zur Drehmomentübertragung mit einem Elektromotor 18 des Vakuumpumpenantriebs 12 verbunden ist. Der Elektromotor 18 wird von einem Frequenzumrichter 20 mit einer dreiphasigen Wechselspannung als Motoreingangsspannung versorgt. Der Frequenzumrichter 20 generiert die Motoreingangsspannung aus einer in der Figur nicht dargestellten Netzversorgungsspannung.

Eine Umschalteinrichtung 22 weist zwei elektrische Schalter 24, 26 auf, die jeweils auf genau eine Phase der dreiphasigen elektrischen Verbindungsleitung 28 zwischen dem Frequenzumrichter 20 und dem Elektromotor 18 wirken. In Abhängigkeit von der Stellung der beiden elektrischen Schalter 24, 26 werden die Windungen des Antriebsmotors als Stern oder als Dreieck verschaltet. In Energieflussrichtung aus Richtung des Spannungsversorgungsnetzes und in Richtung des Elektromotors 18 ist die Umschalteinrichtung 22 also zwischen dem Frequenzumrichter 20 und dem Elektromotor 18 angeordnet und wirkt dort auf die elektrische Verbindungsleitung 28 zwischen dem Frequenzumrichter 20 und dem Elektromotor 18.

Eine Steuereinrichtung 30 ist elektrisch oder optisch mit den Schaltern 24, 26 der Umschalteinrichtung 22 verbunden. Die Steuereinrichtung 30 ist zudem elektrisch oder optisch mit einer Messvorrichtung 32 verbunden. Die Messvorrichtung 32 ist mit Sensoren 33 versehen, die jeweils eine Betriebsgröße der Vakuumpumpe 13, wie zum Beispiel die Temperatur oder die Drehzahl des Pumpenrotors 14 oder den von dem Pumpenrotor 14 erzeugten Druck messen. Die Messwerte der jeweils erfassten Betriebsgröße werden von der Messvorrichtung 32 an die Steuereinrichtung 30 übertragen.

Die Steuereinrichtung 30 überwacht die gemessenen Betriebsgrößen kontinuierlich, in dem diese mit gespeicherten Referenzwerten und/oder Grenzwerten verglichen werden. Bei Überschreiten oder Unterschreiten eines kritischen Wertes ist die Steuereinrichtung 30 dazu ausgebildet, die Schalter 24, 26 zu betätigen, so dass automatisch anhand der Betriebsgröße ein Ändern des Betriebszustandes der Vakuumpumpe 12 erkannt wird und die Motorkennlinie durch Umschaltung der Motorwindungen vom Stern zum Dreieck beziehungsweise vom Dreieck zum Stern gewechselt wird.

Durch die erfindungsgemäße Umschaltung kann der elektrische Antriebsmotor 18 automatisch bei wechselnden Betriebszuständen der Vakuumpumpe 13 zwischen zwei Motorkennlinien umgeschaltet werden. Dies ermöglicht eine optimale Auslegung des Antriebstranges und damit beispielsweise eine Steigerung der Antriebsleistung bei gleicher Baugröße des Vakuumpumpenantriebs 12 oder eine Verkleinerung der Komponenten bei gleicher Antriebsleistung.

## Patentansprüche

1. Verfahren zum Antreiben einer Vakuumpumpe (13) mit einem Vakuumpumpenantrieb (12)
mit
mindestens einem Elektromotor (18), der über eine Antriebswelle (16) mit dem Rotor (14) einer Vakuumpumpe (13) verbunden ist,
einem elektrisch mit dem Motor (18) verbundenen und diesen mit einer Motoreingangsspannung versorgenden Frequenzumrichter (20),
einer Umschalteinrichtung (22) mit mindestens einem elektrischen Schalter (24, 26), wobei die Umschalteinrichtung (22) dazu ausgebildet ist, die Motorwindungen in Abhängigkeit von der Schaltstellung des Schalters (24, 26) zur Veränderung der Motorkennlinie als Stern oder als Dreieck zu verschalten,
einer Messvorrichtung (32) mit Sensoren (33) zur Erfassung von physikalischen Betriebsgrößen der Vakuumpumpe (13) und
einer Steuereinrichtung (30), die elektrisch oder optisch mit der Umschalteinrichtung (22) und der Messvorrichtung (32) verbunden und dazu ausgebildet ist, den mindestens einen Schalter (24, 26) in Abhängigkeit von dem gemessenen Wert der Betriebsgröße der Vakuumpumpe (13) zu betätigen, um die Stern-Dreieck-Umschaltung zu bewirken,
mit den Schritten:
Antreiben der Antriebswelle (16) des Vakuumpumpenrotors (14) mit dem Elektromotor (18),
Versorgen des Elektromotors (18) mit einer Motoreingangsspannung mit dem Frequenzumrichter (20),
Erfassen mindestens einer physikalischen Betriebsgröße der Vakuumpumpe (13) mit den Sensoren (33) der Messvorrichtung (32) und
Betätigen des mindestens einen Schalters (24, 26) der Umschalteinrichtung (22) mit der Steuereinrichtung (30) in Abhängigkeit von dem gemessenen Wert der Betriebsgröße, so dass die Motorwindungen des Elektromotors (18) in Abhängigkeit von der Stellung des Schalters (24, 26) als Stern oder als Dreieck verschaltet werden, um dadurch die Motorkennlinie zu verändern,
**dadurch gekennzeichnet, dass** es sich bei der Betriebsgröße um die Gaszusammensetzung innerhalb der Pumpe handelt.

2. Verfahren nach einem der vorhergehenden Ansprüche, **dadurch gekennzeichnet, dass** es sich bei der Betriebsgröße zudem um die Temperatur der Vakuumpumpe (13), den Innendruck der Vakuumpumpe oder die Drehzahl der Vakuumpumpe handelt.

3. Verfahren nach einem der vorhergehenden Ansprüche, **dadurch gekennzeichnet, dass** die Steuereinrichtung (30) bei Überschreiten eines Grenzwertes der physikalischen Betriebsgröße den Frequenzumrichter (20) und/oder den Elektromotor (18) von einer ersten Motorkennlinie auf eine zweite Motorkennlinie umschaltet.

4. Verfahren nach einem der hervorgehenden Ansprüche, **dadurch gekennzeichnet, dass** die Steuereinrichtung (30) und/oder der Frequenzumrichter (20) dazu ausgebildet sind, bei Betätigen des mindestens eines Schalters (24, 26) zwischen zwei Kennlinien des Elektromotors (18) umzuschalten.

## Claims

1. Method for driving a vacuum pump (12) with a vacuum pump drive (12)
comprising
at least one electric motor (18) connected with the rotor (14) of a vacuum pump (13) via a drive shaft (16),
a frequency converter (20) electrically connected with the motor (18) and supplying the same with a motor input voltage,
a switchover means (22) with at least one electric switch (24, 26), the switchover means (22) being configured to connect the motor windings in dependence on the switching position of the switch (24, 26) in a star connection or a delta connection in order to change the motor characteristic,
a measuring device (32) with sensors (33) for the detection of physical operating parameters of the vacuum pump (13), and
a control means (30) electrically or optically connected with the switchover means (22) and the measuring device (32) and configured to actuate the at least one switch (24, 26) in dependence on the measured value of the operating parameter of the vacuum pump (13), so as to effect the star-delta switchover,
the method comprising the steps of:
driving the drive shaft (16) of the vacuum pump rotor (14) by the electric motor (18),
supplying a motor input voltage to the electric motor (18) by the frequency converter (20),
detecting, by the sensors (33) of the measuring device (32), at least one physical operating parameter of the vacuum pump (13), and
actuating, by the control means (30), the at least one switch (24, 26) of the switchover means (22) in dependence on the measured value of the operating parameter so that the motor windings of the electric motor (18) are connected in a star or a delta connection depending on the switching position of the switch (24, 26), so as to thereby change the motor characteristic,
**characterized in that**
the operating parameter is the gas composition in the pump.

2. Method of one of the preceding claims, **characterized in that** the operating parameter further is the temperature of the vacuum pump (13), the internal pressure of the vacuum pump or the rotational speed of the vacuum pump.

3. Method of one of the preceding claims, **characterized in that** the control means (30) switches the frequency converter (20) and/or the electric motor (18) from a first motor characteristic to a second motor characteristic when a limit value of the physical operating parameter is exceeded.

4. Method of one of the preceding claims, **characterized in that** the control means (30) and/or the frequency converter (20) are configured to switch between two characteristics of the electric motor (18) when the at least one switch (24, 26) is actuated.

## Revendications

1. Procédé d'entraînement d'une pompe à vide (13) par un entraînement de pompe à vide (12) comprenant
au moins un moteur électrique (18) qui est relié par l'intermédiaire d'un arbre d'entraînement (16) au rotor (14) d'une pompe à vide (13),
un convertisseur de fréquence (20) relié électriquement au moteur (18) et alimentant celui-ci avec une tension d'entrée de moteur,
un dispositif de commutation (22) comprenant au moins un commutateur électrique (24, 26), le dispositif de commutation (22) étant conçu pour connecter les enroulements de moteur en fonction de la position de commutation du commutateur (24, 26) afin de modifier la caractéristique de moteur en étoile ou en triangle,
un dispositif de mesure (32) comprenant des capteurs (33) pour détecter des grandeurs de fonctionnement physiques de la pompe à vide (13) et
un dispositif de commande (30) qui est relié électriquement ou optiquement au dispositif de commutation (22) et au dispositif de mesure (32) et qui est conçu pour actionner le commutateur (24, 26), au moins au nombre de un, en fonction de la valeur mesurée de la grandeur de fonctionnement de la pompe à vide (13) afin de provoquer la commutation étoile-triangle,
comprenant les étapes consistant à
entraîner l'arbre d'entraînement (16) du rotor de pompe à vide (14) avec le moteur électrique (18),
alimenter le moteur électrique (18) avec une tension d'entrée de moteur à l'aide du convertisseur de fréquence (20),
détecter au moins une grandeur physique de fonctionnement de la pompe à vide (13) avec les capteurs (33) du dispositif de mesure (32) et actionner le commutateur (24, 26), au moins au nombre de un, du dispositif de commutation (22) avec le dispositif de commande (30) en fonction de la valeur mesurée de la grandeur de fonctionnement, de façon à ce que les enroulements de moteur du moteur électrique (18) soient connectés en étoile ou en triangle en fonction de la position du commutateur (24, 26), afin de modifier ainsi la caractéristique de moteur,
**caractérisé en ce que** la grandeur de fonctionnement est la composition de gaz à l'intérieur de la pompe.

2. Procédé selon la revendication précédente, **caractérisé en ce que** la grandeur de fonctionnement est de plus la température de la pompe à vide (13), la pression interne de la pompe à vide ou la vitesse de rotation de la pompe à vide.

3. Procédé selon l'une des revendications précédentes, **caractérisé en ce que** le dispositif de commande (30) commute d'une première caractéristique de moteur à une seconde caractéristique de moteur en cas de dépassement d'une valeur limite de la grandeur de fonctionnement physique du convertisseur de fréquence (20) et/ou du moteur électrique (18).

4. Procédé selon l'une des revendications précédentes, **caractérisé en ce que** le dispositif de commande (30) et/ou le convertisseur de fréquence (20) sont conçus pour commuter entre deux caractéristiques du moteur électrique (18) en cas d'actionnement du commutateur (24, 26), au moins au nombre de un.
